# EUROPÄISCHE PATENTANMELDUNG

(11) **EP 0 846 733 A2**
(43) Veröffentlichungstag der Anmeldung: **10.06.1998**
(21) Anmeldenummer: 97120144.7
(22) Anmeldetag: 18.11.1997
(51) Int. Cl.: C09D 5/08

(54) **Lackiertes metallisches Substrat mit einer korrosionsschützenden Haftschicht auf Basis von Polysäuren und Verfahren zum Aufbringen der Haftschicht**

(30) Priorität: 05.12.1996 DE 19650478
(71) Anmelder: Daimler-Benz Aktiengesellschaft, 70546 Stuttgart (DE)
(72) Erfinder: Negele, Ute, Dr., 71404 Korb (DE); Becher, Chris, 72574 Bad Urach (DE)

(57) **Zusammenfassung**

Die Erfindung betrifft eine lackiertes metallisches Substrat mit einer Schicht einer Polysäure unter der Lackierung und unmittelbar auf der Substratoberfläche sowie ein Verfahren zum Aufbringen der Haftschicht. Dabei wird das Substart gereinigt, entfettet und anschließend eine Polysäureschicht aufgetragen. Um diese Schicht mit guter Naßhaftfestigkeit der Lackierung und guter korrosionsschützenden Wirkung sowie mit ökologisch geringeren Nachteilen bzw. Folgelasten aufzubringen, werden für die Haftschicht Polysäuren verwendet, die aus Homo- oder Copolymeren von Doppelbindungen enthaltenden Phosphonäuren oder funktionellen Phosphonsäureestern bestehen. Die verwendeten Polysäuren sind zur Steigerung der Korrosionsschutzwirkung wahlweise mit Polymeren einer Glastemperatur über 100°C, wie z.B. Phenol-, Harnstoff- oder Epoxidharzen und/oder mit niedermolekularen Phosphon- und/oder Carbonsäuren mit bis zu dreißig Kohlenstoffatomen in der Kohlenstoffkette kombiniert. Das Stabilisieren der anodisch niedergeschlagenen Korrosionsschutzschicht erfolgt durch Erhitzen. Die Polymere der Korrosionsinhibitorschicht können mittels funktioneller Gruppen, die nicht an das Substrat adsorbiert sind, inter-/intramolekular oder zur nächsten Lackschicht vernetzt werden.

## Beschreibung

Die Erfindung geht aus von einem lackierten metallischen Substrat mit einer Schicht einer korrosionsschützenden Haftschicht unter der Lackierung unmittelbar auf der Substratoberfläche nach dem Oberbegriff von Anspruch 1 und sie geht ferner aus von einem Verfahren zum Aufbringen der Haftschicht nach dem Oberbegriff von Anspruch .

Nachfolgend ist in diesem Zusammenhang stets von "korrosionsschützender" Schicht die Rede, wobei dies als Oberbegriff für eine die Korrosion verlangsamende und für eine die Korrosion verhindernde, also korrosionsinhibierende Wirkung verstanden sein soll.

Üblicherweise werden aus metallische Karosserien von Kraftfahrzeugen vor dem Lackieren heute mit einer Phospatierungsschicht in einer Lagenstärke von etwa 2 µm versehen. Anschließend wird eine erste organische Schicht elektrophoretisch in einem Tauchlackierbad aufgebracht. Diese Art des Schichtaufbaues liefert eine gut haftende Lackierung und einen guten Korrosionsschutz aufgrund von Zusatzstoffen im KTL-Lack. Nachteilig daran ist jedoch, daß in den aufgrund der Phosphatierung anfallenden Abwässern ökologisch bedenkliche Nickelsalze und in den aufgrund der kataphoretischen Tauchlackierung anfallenden Abwässern ökologisch bedenkliche Bleisalze anfallen, die in aufwendiger Weise aus den Abwässern herausgeholt und in Form von Schlämmen aus Schwermetalloxiden als giftiger Sondermüll in kostspieliger Weise entsorgt werden müssen.

Zur Vermeidung dieser Nachteile wird in der nicht vorveröffentlichten DE P 195 24 198.3 vorgeschlagen, anstelle der bisherigen Haftschicht Polysäuren zu verwenden, die aus Homo- oder Copolymeren (Vinylverbindungen) von Carbonsäuren mit Doppelbindungen oder aus Homo- oder Copolymeren von Carbonsäuren und Carbonsäureestern mit funktionellen Gruppen, z.B. Hydroxygruppen bestehen, die auch blockiert sein können. Diese Polysäuren werden außerdem wahlweise mit Polymeren hoher Glastemperatur, z.B. über 100°C, wie beispielsweise Phenol-, Harnstoff- oder Epoxidharzen als schichtverdichtende Polymere oder mit niedermolekularen, wasserlöslichen Carbonsäuren - mit zwei bis dreißig Kohlenstoffatomen in der Kette - oder mit beidem kombiniert. Die aufgebrachte Polysäureschicht ist als Ersatz der bisher üblichen Phosphatierung und der kathodischen Tauchlackierung dienen geeignet und gewährleistet in der Funktion einer Haftschicht den notwendigen Korrosionsschutz.

Weitere Vorteile der Polysäuren liegen in folgendem:
▷ Im Vergleich zu bisherigen Systemen mit Polysäuren kann mittels der erfindungsgemäßen Haftschicht ein wesentlich höherer Qualitätsstand bezüglich des Korrosionsschutzes erreicht werden.
▷ Bisher war ein so wirkungsvoller Korrosionsschutz nur mit einer gemeinsamen Anwendung sowohl einer Phosphatierung als auch einer kathodischen Tauchlackierung erreichbar.
▷ Die allein durch die erfindungsgemäße Haftschicht erreichbare hohe Korrosionsschutzwirkung läßt eine wesentliche Prozeßvereinfachung zu; unter Auslassung einer KTL-Grundierung kann in einer - eventuell elektrophoretisch unterstützt - Tauchapplikation anschließend gleich der Füllerlack aufgetragen werden.
▷ Durch eine - u.U. anodische - Abscheidung der Korrosionsschutzschicht wird ein sehr umweltfreundlicher Prozeß ohne Probleme einer Abwasserreinigung und/oder einer Schlammentsorgung gewährleistet. Zudem können Polysäuren in Salzform eingesetzt werden, wodurch in Wasser schwerlösliche Polysäuren eingesetzt werden können. Die elektrische Abscheidung hat weiterhin den Vorteil, daß die haftvermittelnden Säuregruppen der Polysäuren mehr zum Substrat hin orientiert werden und so mit der Metalloberfläche besser reagieren können.
▷ Die sehr guten Korrosionsschutzeigenschaften der Polysäure sind werkstoffunabhängig und erlauben eine Anwendung auch auf in Mischbauweise, d.h. aus Stahl und Leichtmetallen erstellten Karosserien; beim jetzigen Stand der Technik ist eine gleichzeitige Phosphatierung von Stahl und Aluminium nicht möglich, da Aluminium das Phosphatierbad vergiftet.

Aufgabe der Erfindung ist es, bei Beibehaltung der aus der DE-P 195 24 198.3 bekannten Vorteile eine weitere Möglichkeiten zur Aufbringung von auf Polysäuren basierenden korrosionsverhindernden Haftschicht anzugeben. Desweiteren ist es Aufgabe der Erfindung ein Verfahren zum Auftrag dieser Haftschicht anzugeben

Diese Aufgabe wird durch die kennzeichnenden Merkmale von Anspruch 1 und bei Zugrundelegung des gattungsgemäßen Verfahrens durch die kennzeichnenden Merkmale von Anspruch gelöst. Danach kommen als Polysäuren nun anstelle von Carbon-Gruppen nunmehr Phosphonsäuren zum Einsatz, die aus Homo- oder Copolymeren von Phosphosäuren mit Doppelbindungen und/oder aus Copolymeren von Phosphonsäuren mit Vinylverbindungen und/oder aus Homo- oder Copolymeren von Phosphonsäuren mit funktionellen Phosphonsäureestern, die auch blockiert sein können.

Hierbei ist es zweckmäßig daß die Haftschichten aus Polysäuren mit mindestens 10, bevorzugt 20 und besonders bevorzugt mindesten 50 Phosphonsäure-Gruppen pro Polymermolekül aufweist. In einigen Fällen ist es sinnvoll, wen die Anzahl der Phosphonsäure-Gruppen größer 100 ist.

Die Polysäuren werden außerdem wahlweise mit Polymeren hoher Glastemperatur, insbesondere über 100°C, wie z.B. Phenol-, Harnstoff-, Epoxidharzen als schichtverdichtende Polymere und/oder mit niedermolekularen Phosphon- und/oder Carbonsäuren mit bis zu dreißig Kohlenstoffatomen in der Kohlenstoffkette kombiniert, wodurch die korrosionsschützende Wirkung enorm gesteigert wird. Die Polysäureschicht wird durch Erhitzen immobilisiert, wobei sie infolge einer Oxidation von Fe(II) zu Fe(III) in Wasser unlöslich wird.

Es wurde festgestellt, daß die korrosionsschützende Wirkung der erfindungsgemäß formulierten und applizierten Polysäuren im wesentlichen darauf zurückzuführen ist, daß die Naßhaftfestigkeit der Polysäureschicht besonders gut ist. Durch die Wirkung von funktionellen Gruppen kommt eine sehr innige Bindung der Polysäureschicht (Haftschicht) an der Metalloberfläche zustande, die eine gute Haftfestigkeit bei Einwirkung von Wasser und auch einen wirkungsvollen Korrosionsschutz herbeiführt. Die Naßhaftfestigkeit der Haftschicht ist u.a. sehr wesentlich ursächlich für die spätere korrosionsschützende Wirkung der Schicht.

Die auf ein metallisches Substrat erfindungsgemäß aufgebrachte Polysäureschicht kann als Ersatz der bisher üblichen Phosphatierung und der kathodischen Tauchlackierung verwendet werden und gewährleistet in der Funktion einer Haftschicht den notwendigen Korrosionsschutz. Auch die weiteren oben genannten Vorteile bleiben im vollem Umfang erhalten.

Zwar ist es bekannt, daß Polysäuren - alleine oder als Copolymere mit Ester oder Aromaten - eine verbesserte Naßhaftfestigkeit von Lacken auf Metallen, z.B. Stahl oder Aluminium, ergeben. Jedoch kann der geforderte, hohe Korrosionsschutz, wie er bisher bei Pkw-Lackierungen üblich und durch die Phosphatierschicht erreichbar ist, durch die Polysäuren allein nicht erreicht werden. Weiterhin ist es bekannt, daß sich Polyacrylsäure anodisch abscheiden läßt. Dieses Wissen konnte den Fachmann jedoch nicht zu der erfindungsgemäßen, sowohl ökologlsch als auch bezüglich des Korrosionsschutzes relevanten Verbesserung des dünnen Haftschichtauftrages veranlassen.

Die Haftschicht braucht lediglich etwa 10 bis 1000 Nanometer, bevorzugt 10 bis 500 nm und besonders bevorzugt 10 bis 200 nm stark zu sein. Bereits diese geringe Lagenstärke bietet eine sehr wirkungsvolle Verbesserung der Naßhaftfestigkeit und der Schutzwirkung; sie kann in einer relativ kurzen Applikationszeit aufgebracht und ebenfalls in einer sehr kurzen Zeit eingebrannt werden.

Hierbei ist es von besonderem Vorteil, wenn metallische Substrate wie insbesondere Bleche und hierbei insbesondere Bleche für Formteile von Kraftfahrzeugkarosserien bereits bspw. in einem Walzwerk und hier insbesondere vor dem Aufrollen auf einen Coil mit der erfindungsgemäßen Haftschicht versehen werden.

In zweckmäßiger Ausgestaltung der das metallische Substrat betreffenden Erfindung kann ferner vorgesehen sein, daß auf die schützende Haftschicht als unterste Lacklage eine Füllerschicht aufgebracht ist, die vorteilhafterweise durch Tauchapplikation (stromlos oder kathodisch) aufgetragen wird.

Bezüglich des verfahrensmäßigen Aspektes der Erfindung besteht eine zweckmäßige Ausgestaltung darin, daß die Haftschicht durch Eintauchen des Substrats, insbesondere einer Karosserie in ein Bad aufgebracht werden kann, wobei ferner das Aufbringen auf das eingetauchte Substrat elektrophoretisch bei positiv gepoltem Werkstück, also anodisch unterstützt wird.

Desweiteren sind alle bekannten Applikationsverfahren wie Rollen, Walzen, elektrostatisches Spritzen usw. für den Auftrag der Haftschicht auf die metallische Substratoberfläche des Substrats geeignet.

Durch den anodisch unterstützten Schichtauftrag ergibt sich ein rascherer, ein geschlossenerer und ein orientierterer Schichtaufbau. Das Immobilisieren der schützenden Haftschicht erfolgt vorteilhafterweise durch Erhitzen auf 25 bis 250 °C, bevorzugt auf 50 bis 200°C und besonders bevorzugt auf 100 bis 150°C.

Ferner kann das Immobilisieren der Haftschicht zweckmäßigerweise durch Vernetzung mittels funktioneller Gruppen in den Polymeren, die nicht an die Blechoberfläche adsorbiert sind, ergänzt oder unterstützt werden, wodurch ein in sich sehr geschlossener Filmverbund innerhalb der Haftschicht und auch eine sehr gute Bindung zur folgenden Schicht entsteht. Die Vernetzung kann innerhalb der Haftschicht und/oder mit der nachfolgenden Lackschicht erfolgen. Man kann die Haftschicht vor dem oder zugleich mit dem Einbrennen der nachfolgenden Lackschicht vernetzen.

Die Erfindung ist grundsätzlich universell zum Korrosionsschutz von Metallen einsetzbar und simultan auch auf unterschiedlichen Metallen anwendbar, beispielsweise auf Stahl, Aluminium oder Magnesium. Die Polysäure kann sowohl durch anodische Abscheidung als auch durch stromloses Tauchen appliziert werden.

### Beispiel

Ein Prüfblech (amer. Prüfbleche mit der Bezeichnung Q-Panel, Vertrieb Deutschland: Fa. Pausch) aus üblichem gewalztem Karosserie-Stahlblech (Werkstoffbezeichnung des Stahlblechs: RR-St 13) mit einer wässrigen Phosphonsäurelösung vorbehandelt und diese anschließend mit einem Zweikomponenten -PolyurethanKlarlack beschichtet. Mit diesen Prüfblechen wurde die Naßfestigkeit der Deckbeschichtung sowie die Korrosionsbeständigkeit geprüft.

Zur Vorbehandlung wurde ein Polyvinyl-Phosphonsäure mit einer molaren Masse von 12000 g/mol verwendet. Daraus wurde eine wässrige Lösung gebildet, die 5 Gew.-% Polyvinyl-Phosphonsäure enthält. Zum Applizieren der Polysäureschicht wurde diese 1 Minute aus der wässrigen Lösung auf das Prüfblech abgeschieden. Anschließend wurde das Prüfblech 10 Minuten lang bei 200 °C getrocknet. Der Lack wurde in der üblichen Lagenstärke sprühappliziert und eingebrannt.

Die Naßfestigkeit wurde mit dem Klebebandabrißtest (tape peel test) bestimmt. Dazu wird die Probe bei Raumtemperatur eine bestimmte Zeit lang in destilliertes Wasser gelegt, die Probe anschließend geritzt, oberflächlich mit einem Tuch abgetrocknet und ein selbstklebendes Prüf Klebeband bestimmter Breite und mit definierter und reproduziertbarer Haftklebeigenschaft symmetrisch zum Ritz aufgeklebt.

Wenn sich beim Abziehen des Prüf-Klebebandes, bezogen auf die Klebefläche, mehr als 10 % der Beschichtung vom Prüfblech lösen, so ist der Test - bei der stattgefundenen Wässerungszeit - beendet. Löst sich weniger von der Beschichtung ab, so wird um ein weiteres Zeitintervall gewässert und an einem neuen Ritz der Test erneut durchgeführt. Wässern und Klebebandtest an einem neuen Ritz werden so oft wiederholt, bis sich die Beschichtung erstmals im Ritzbereich löst. Die gesamte hierfür benötigte Wässerungszeit wird als Maßzahl für die Naßhaftfestigkeit verwendet.

Die auf diese Art ermittelte Naßhaftfestigkeit betrug bei der erfindungsgemäßen Beschichtung etwa 500 Stunden bzw. etwa 20 Tage. Bei unvorbehandelten und unter sonst vergleichbaren Bedingungen beschichteten Prüfblechen löst sich die Beschichtung zumeist nach etwa 2 Stunden.

Zur Ermittlung der Korrosionsbeständigkeit wird die Lackschicht mittels eines Erichsen-Stichels mit einem Riß definierter Querschnittsform und 1 mm Breite versehen, der die Beschichtung bis auf den Grundwerkstoff des Prüfbleches durchdringt. Anschließend wird das mit der geschädigten Beschichtung versehene Prüfblech mit dem VDA-Wechseltest (VDA = Verband der deutschen Automobilhersteller) bewettert.

Ein Prüfzyklus des VDA-Wechseltests dauert eine Woche und setzt sich aus einem 24 Stunden Salzsprühtest, einem 96 Stunden-Klimawechseltest und einer 48 stündigen Lagerung bei Raumtemperatur und ca. 50 % Luftfeuchtigkeit zusammen. Der 96 Stunden Klimawechseltest umfaßt vier Zyklen einer 8 Stunden Trocknung und einer 16 Stunden Lagerung bei 40 °C und 90 % Luftfeuchtigkeit.

Zur Bewertung der Qualität der Beschichtung wird an mehreren Stellen die Breite der Unterwanderung der Beschichtung gemessen und daraus ein Mittelwert gebildet. Die Unterwanderung der Beschichtung ist ein Maß für die Korrosionsbeständigkeit, wobei ggf. die Zahl der Prüfzyklen mit angegeben wird. Hierbei ist entscheidend, auf welche Breite die Beschichtung vom Untergrund gelöst oder gelockert wird.

Mit der erfindungsgemäßen Beschichtung wurde bei 7 Bewetterungszyklen eine Unterwanderung zwischen 6 und 8 mm festgestellt. Dem gegenüber weisen unter sonst vergleichbaren Bedingungen beschichtete Prüfbleche bei nur einem einzigen Bewetterungszyklus bereits eine Unterwanderung zwischen 50 und 60 mm auf.

## Patentansprüche

1. Lackiertes metallisches Substrat mit einer schützenden Haftschicht gegen Korrosion unter der Lackierung unmittelbar auf der Substratoberfläche,
mit einer aus Polysäuren mit mehreren Phosphonsäure-Gruppen pro Polymermolekül gebildeten Haftschicht,
wobei die Polysäuren aus
▷ Homo- oder Copolymeren von Doppelbindungen enthaltenden Phosphonsäuren und/oder
▷ Copolymeren von Phosphonsäuren mit Vinylverbindungen und/oder
▷ Homo- oder Copolymeren von Phosphonsäuren mit funktionellen Phosphonsäureestern,
bestehen und
wobei ferner die verwendeten Polysäuren kombiniert sind
▷ mit Polymeren mit einer Glastemperatur über 100°C, wie z.B. Phenol-, Harnstoff-, Epoxidharzen und/oder
▷ mit niedermolekularen Phosphon- und/oder Carbonsäuren mit bis zu dreißig Kohlenstoffatomen in der Kohlenstoffkette.

2. Substrat nach Anspruch 1,
**dadurch gekennzeichnet**,
daß die Polysäure aus mindestens zehn, bevorzugt mindesten 20, und besonders bevorzugt mindestens 50 Phosphonsaüren pro Polymermolekül gebildet ist.

3. Substrat nach Anspruch 1,
**dadurch gekennzeichnet**,
daß die Korrosionsschutzschicht etwa 10 bis 1000 Nanometer, bevorzugt 10 bis 500 Nanometer, besonders bevorzugt 10-200 Nanometer stark ist.

4. Substrat nach Anspruch 1,
**dadurch gekennzeichnet**,
daß die auf die Korrosionsschutzschicht aufgebrachte erste Lage der Lackierung eine Füllerschicht ist.

5. Substrat nach Anspruch 1,
**dadurch gekennzeichnet**,
daß das Substrat ein Blech , insbesondere eines Coils ist.

6. Substrat nach Anspruch 1,
**dadurch gekennzeichnet**,
daß das Substrat ein Blechbauteil, insbesondere einer Fahrzeugkarosserie ist.

7. Verfahren zum Aufbringen einer Schicht einer schützenden Haftschicht auf ein metallisches Substrat vor dessen Lackieren,
▷ bei dem das Substrat gereinigt und entfettet wird und
▷ bei dem anschließend eine Haftschicht auf der Oberfläche des Substrats niedergeschlagen und dieser Belag anschließend auf der Substratoberfläche stabilisiert wird, wobei
▷ bei dem als haftvermittelndes Polymer Polysäuren mit mehreren Phosphonsäure-Gruppen Pro Polymermolekül verwendet werden,
▷ wobei die Polysäuren aus Homo- oder Copolymeren von Doppelbindungen enthaltenden Phosphonsäuren und/oder
▷ aus Copolymeren von Phosphonsäuren mit Vinylverbindungen und/oder aus Homo- oder Copolymeren von Carbonsäuren mit funktionellen Phosphonsäureestern bestehen,
▷ bei dem die verwendete(n) Polysäure(n) wahlweise mit Polymeren einer Glastemperatur über 100°C, wie z.B. Phenol-, Harnstoff - oder Epoxidharzen und/oder mit niedermolekularen Phosphon und/oder Carbonsäuren, die bis zu dreißig Kohlenstoffatome in der Kohlenstoffkette aufweisen, kombiniert werden,
▷ bei dem die haftvermittelde Schicht aus einer wäßrigen Lösungen von Polysäuren gebildet wird, und
▷ bei dem die schützenden Haftschicht erhitzt, durch die Erhitzung immobilisiert und durch die Immobilisieren stabilisiert wird.

8. Verfahren nach Anspruch 7,
**dadurch gekennzeichnet**,
daß Polysäuren mit mindestens zehn, bevorzugt mit mindestens 20, und besonders bevorzugt mit mindestens 50 Phosphonsaüren pro Polymermolekül verwendet werden.

9. Verfahren nach Anspruch 7,
**dadurch gekennzeichnet**,
daß zur Bildung der haftvermittelnden Schicht eine wässrige Lösung mit einer Konzentration von 0,1 bis 5,0 %, vorzugsweise 0,2 bis 2,0% an Polysäuren verwendet wird.

10. Verfahren nach Anspruch 7,
**dadurch gekennzeichnet**,
daß die Polysäure(n) der Haftschicht mittels funktioneller Gruppen, die nicht an das Substrat adsorbiert sind, inter- oder intramolekular oder zur nächsten Lackschicht vernetzt werden.

11. Verfahren nach Anspruch 7,
**dadurch gekennzeichnet**,
daß die Haftschicht durch Erhitzen bei etwa 20 bis 250°C, bevorzugt 50 bis 200°C, und besonders bevorzugt 100-150°C immobilisiert wird.

12. Verfahren nach Anspruch 7,
**dadurch gekennzeichnet**,
daß das Aufbringen der Haftschicht durch Eintauchen der Karosserie in ein Bad erfolgt.

13. Verfahren nach Anspruch 7,
**dadurch gekennzeichnet**,
daß das Aufbringen der Haftschicht auf die in das Bad eingetauchte Karosserie elektrophoretisch, vorzugsweise anodisch unterstützt wird.
